# FASCICULE DE BREVET EUROPEEN

(11) **EP 2 505 054 B1**
(45) Date de publication et mention de la délivrance du brevet: **18.12.2013**
(21) Numéro de dépôt: 12161836.7
(22) Date de dépôt: 28.03.2012
(51) Int. Cl.: A01K 1/00, E05F 7/02, E05F 15/08

(54) **Cloison montante et pivotante**
Hochfahrende, schwenkbare Trennwand
Rising and pivoting partition

(30) Priorité: 29.03.2011 BE 201100190
(43) Date de publication de la demande: 03.10.2012
(73) Titulaire: J Meta SPRL, 6830 Bouillon (BE)
(72) Inventeur: Jeunehomme, Christian, 6830 BOUILLON (BE); Jeunehomme, Rudy, 08200 BALAN (FR)
(74) Mandataire: Pronovem

(56) Documents cités:
- EP-A2- 0 119 385
- DE-A1- 4 218 654
- DE-A1-102006 031 477
- FR-A1- 2 707 695
- GB-A- 2 110 296
- GB-A- 2 200 164

## Description

### Objet de l'invention

La présente invention se rapporte à une cloison et, plus particulièrement, à une cloison pour box à chevaux, pouvant être levée au moyen d'un système hydraulique et pouvant pivoter sur un angle de 180°.

### Etat de la technique

L'opération de ramassage d'une litière équine dans un box se fait généralement avec une fourche, ce qui nécessite beaucoup de temps et de courage. Le coût de la main d'oeuvre, de même que le peu de candidats pour ce travail physique, font que pour les unités moyennes ou importantes, on recherche des moyens mécaniques qui augmentent la rapidité et qui ne nécessitent pas ou peu d'efforts physiques.

Pour une utilisation optimale de ces moyens mécaniques, il est préférable que les parois latérales ou transversales des boxes s'ouvrent totalement. Il existe ainsi des façades pivotant à 180° et venant se superposer sur la façade voisine dégageant ainsi le couloir pour le passage d'une remorque.

Le pivotement de la paroi nécessite des jeux fixes importants au sol, de l'ordre de quelques centimètres, pour être au dessus des irrégularités du sol du couloir. L'inconvénient majeur de cet espace sous la façade est que la litière intérieure vient déborder dans le couloir.

Dans d'autres domaines que le domaine équestre, on connaît des portails ou portes pouvant être levés avant pivotement.

On peut ainsi citer le brevet FR 2 707 695 B1 divulguant des portails à mouvements d'ouverture et de fermeture motorisés où chacun des deux vantaux en début de mouvement d'ouverture bascule légèrement pour échapper à une butée fixe.

On peut aussi citer le document DE 10 2006 031 477 A1 divulguant un mécanisme d'entraînement rotatif sur lequel vient se fixer une porte de véhicule. Le mécanisme comporte un axe monté rotatif sur une bille et qui peut être déplacé axialement à l'aide d'un piston.

On peut également citer le document DE 42 18 654 A1 qui divulgue une porte battante, utilisée comme cloison de séparation dans un espace. La cloison de séparation est munie d'un montant latéral creux monté pivotant et comportant des moyens d'élévation.
On connaît en outre du document GB 2 200 164 A un mécanisme de charnières destiné à être fixé à une porte. Le mécanisme comprend une charnière et un goujon destiné à être engagé dans une ouverture de la charnière pour permettre le pivotement de la charnière autour du goujon. Le mécanisme comprend en outre des moyens pour déplacer la charnière ou le goujon de telle sorte que ces deux éléments soient séparables. Une porte fermée peut être supportée entre deux montants par quatre de ces mécanismes, la porte pouvant ainsi être pivotée au choix autour de chacun des montants.

Les critères auxquels doivent répondre ces portes et portails sont différents de ceux requis dans le domaine équestre. Dans le domaine équestre, la cloison doit avoir des spécificités bien particulières qui lui permettent de supporter le poids d'un cheval poussant sur la façade ou de résister à sa propre charge s'élevant jusqu'à 400 kilos et répartie sur une longueur en porte à faux allant jusqu'à 4 mètres.

### Buts de l'invention

La présente invention vise à fournir une solution qui permette de s'affranchir des inconvénients de l'état de la technique.

La présente invention vise plus particulièrement à réaliser une cloison posant au sol lorsqu'elle est en position fermée, et donc ne laissant ainsi plus passer la paille de la litière, et pouvant néanmoins être aisément pivotée à 180° pour se rabattre sur la cloison voisine ou tout emplacement adjacent.

La présente invention vise en outre à réaliser une cloison ayant les spécificités requises pour un box à chevaux.

### Principaux éléments caractéristiques de l'invention

La présente invention se rapporte à une cloison pour box à chevaux selon la revendication 1.

Selon des modes particuliers de l'invention, la cloison comporte au moins une ou une combinaison appropriée des caractéristiques suivantes:
- elle comporte en outre une porte montée coulissante sur un rail solidaire de la poutre linteau, ladite porte étant destinée à libérer un accès à un espace intérieur délimité par la cloison lorsqu'elle est coulissée devant la paroi fixe;
- les moyens d'élévation comportent un vérin hydraulique logé à l'intérieur du premier montant latéral creux et une pompe;
- la paroi fixe est encadrée par le premier montant latéral, la poutre linteau, une tranche inférieure et une tranche verticale, ladite tranche inférieure ou la base de ladite tranche verticale étant munie d'un logement destiné à accueillir un premier ergot lorsque la cloison repose au sol, ledit ergot étant ancré dans le sol;
- le premier montant latéral est surmonté par une tige axiale destinée à coulisser à l'intérieur d'un anneau d'un dispositif de réglage d'aplomb de la cloison;
- ledit dispositif comporte une tige filetée dont l'axe est sensiblement parallèle à celui de la poutre linteau, ladite tige étant immobilisée à l'aide d'écrous de réglage disposés de part et d'autre d'un profilé dont une des ailes est sensiblement parallèle à l'axe longitudinal du premier montant latéral, ladite tige étant terminée à l'une de ses extrémités par ledit anneau;
- la pompe est intégrée avec le vérin hydraulique à l'intérieur du premier montant latéral et actionnable manuellement via une ouverture ménagée sur le premier montant latéral;
- elle comporte des moyens pour verrouiller la porte coulissante en position ouverte ou fermée;
- la bille est en acier;
- la bille est disposée dans un alésage sur une plaque;
- la base de la tranche verticale est solidaire d'un profilé en L servant de guide lors du coulissement de la porte;
- il existe un espace de taille inférieur à un centimètre en dessous d'une partie ou de la totalité de la tranche inférieure de la paroi fixe.

La présente invention se rapporte également à un box à chevaux comportant une cloison telle que décrite ci-dessus.

### Brève description des figures

La figure 1 représente respectivement une vue en élévation et en plan de la cloison selon l'invention.

La figure 2 représente une vue en coupe verticale détaillée du système hydraulique (détail A) et du système de rotation à bille (détail B) selon l'invention. A gauche, la cloison est en position levée et, à droite, elle est en position posée.

La figure 3 représente une vue en plan de la façade pivotant à 180° selon l'invention.

La figure 4A et la figure 4B représentent respectivement selon l'invention une coupe selon la ligne AA de la figure 4B du réglage d'aplomb et de la fixation de la poutre linteau par un ergot, et une coupe selon la ligne BB de la figure 4A du réglage d'aplomb et de la fixation de la poutre linteau par l'ergot.

La figure 5 représente respectivement selon l'invention à gauche une vue latérale de la porte coulissante et de la fixation de la paroi fixe par un ergot et une vue en coupe verticale de la fixation de la paroi fixe par le même ergot.

### Légende:

(1) Cloison
(2) Châssis
(3) Paroi fixe
(4) Zone d'accès à l'intérieur du box
(5) Porte coulissante
(6) Poutre linteau
(7) Premier montant latéral creux
(8) Second montant latéral fixe
(9) Tranche inférieure de la paroi fixe
(10) Tranche verticale de la paroi fixe
(11) Rail
(12) Première tranche verticale de la porte
(13) Seconde tranche verticale de la porte
(14) Enclave
(15) Profilé de guidage
(16) Première aile du profilé (15)
(17) Seconde aile du profilé (15)
(18) Logement dans la paroi fixe
(19) Ergot
(20) Plaque métallique
(21) Béton
(22) Ergot
(23) Evidement dans la poutre linteau
(24) Vérin hydraulique et pompe
(25) Ouverture sur le premier montant
(26) Tige du premier montant
(27) Dispositif de réglage d'aplomb
(28) Profilé du dispositif de réglage d'aplomb
(29) Tige filetée
(30) Ecrou
(31) Anneau
(32) Bille
(33) Alésage
(34) Plaque en dessous de la bille

### Description détaillée de l'invention

La présente invention se rapporte à une cloison munie de moyens permettant de la soulever (ou de l'abaisser) et de la faire pivoter à 180°. On parlera indifféremment par la suite de cloison ou de façade. La présente invention est plus particulièrement illustrée pour une façade de box à chevaux mais elle peut s'étendre à d'autres domaines (portails, portes, ...) où il est nécessaire que la cloison repose sur le sol et soit soulevée avant pivotement. On entend par reposer au sol, qu'elle se trouve à une distance inférieure à un centimètre du sol.

Dans le cadre des boxes à chevaux, la présente invention est d'application pour la cloison longitudinale, dite façade comportant la porte, c'est-à-dire la cloison en regard du couloir, et pour la cloison transversale, dite de séparation, entre les boxes ne comportant pas de porte. La présente invention est illustrée ci-dessous pour une cloison longitudinale.

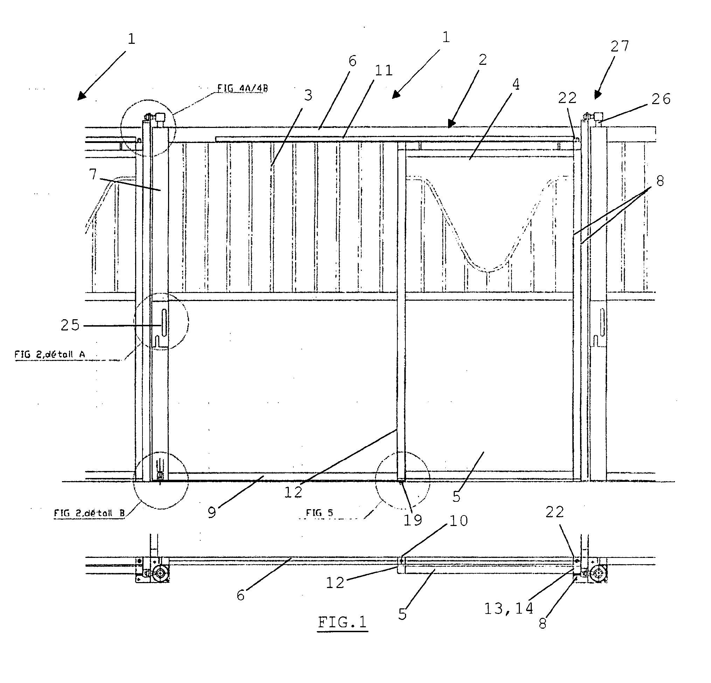

La cloison longitudinale 1 d'un box à chevaux accolée de part et d'autre à une autre cloison longitudinale est illustrée à la figure 1. Elle comporte un châssis 2, une paroi fixe 3 et une zone d'accès 4 à l'intérieur du box obstruée par une porte coulissante 5. On entend par paroi fixe, une paroi qui n'est pas coulissante.

Le châssis 2 comporte une poutre linteau 6 reliant dans leur partie supérieure un premier montant latéral creux 7 à un second montant latéral 8. La paroi fixe 3 comporte une tranche inférieure 9 sensiblement horizontale solidaire à une de ses extrémités du premier montant latéral 7 et une tranche verticale 10 en regard de la zone d'accès 4 (ou du second montant latéral en l'absence d'une zone d'accès) et solidaire à son extrémité supérieure de la poutre linteau 6. La porte 5 coulisse sur un rail 11 solidaire de la poutre linteau 6 et est destinée à venir se positionner, lorsqu'elle est ouverte, devant la paroi fixe 3 laissant ainsi l'accès 4 à l'intérieur du box libre. La porte coulissante 5 comporte une première tranche verticale 12 qui vient se superposer sur la tranche verticale 10 de la paroi fixe lorsque la porte est fermée et une seconde tranche verticale 13 qui vient se loger dans une enclave 14 du second montant latéral lorsque la porte est fermée. Selon l'invention, la cloison peut être munie de moyens (non visibles sur les figures) permettant de verrouiller la porte coulissante lorsqu'elle est en position ouverte ou fermée. Ainsi, les première et seconde tranches verticales de la porte coulissante peuvent être munies en leur sommet d'un verrou à ressort se logeant dans le rail.

Le second montant latéral 8 est fixe et il est muni d'une enclave 14, telle que mentionnée précédemment, en forme de U, visible dans la vue en plan de la figure 1, qui s'étend depuis le sol sur toute la hauteur de la porte coulissante. Au-delà de la porte coulissante, le second montant latéral s'étend jusqu'à une hauteur supérieure à celle de la poutre linteau et est dépourvu à cet endroit d'une enclave en forme de U.

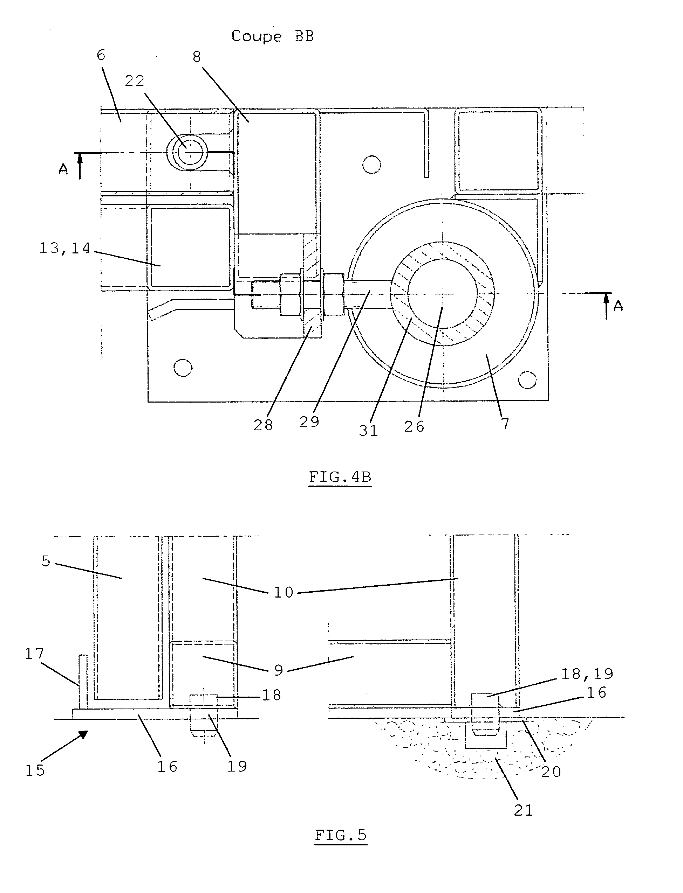

La base de la tranche verticale 10 de la paroi fixe est solidaire d'un profilé 15 formant sensiblement un L (voir figure 5). Le profilé 15 en L comporte une première aile 16 disposée sur le sol lorsque la cloison est en position basse et une seconde aile 17 disposée à 90° par rapport à la première aile et venant encadrer la porte coulissante 5 lui servant ainsi de guide. Préférentiellement, le profilé ne s'étend pas sur toute la longueur de la tranche inférieure de la paroi fixe permettant ainsi de limiter le contact entre le profilé, de préférence galvanisé, le béton et l'urine des chevaux. Il en résulte qu'un léger espace subsiste en dessous d'une partie ou de la totalité de la tranche inférieure. Selon l'invention, cet espace est, de préférence, inférieur à un centimètre, par exemple de l'ordre de huit millimètres, pour empêcher le passage de la litière.

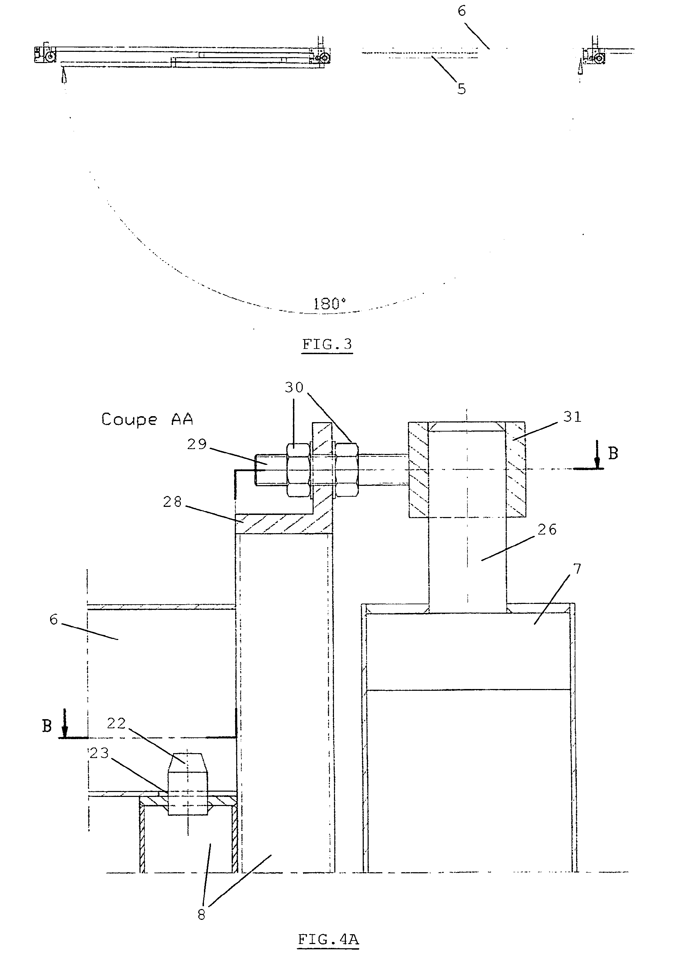

Tel qu'illustré aux figures 1 et 5, la base de la tranche verticale 10 de la paroi fixe est munie d'un logement 18 destiné à accueillir un ergot 19, aussi appelé premier ergot, lorsque la cloison repose au sol. On notera que la présente invention s'étend également à des variantes où l'ergot est solidaire de la paroi fixe et vient se loger dans le sol. De même, l'ergot peut être disposé indifféremment sur la tranche inférieure ou sur la base de la tranche verticale de la paroi fixe. Préférentiellement et tel qu'illustré à la figure 5 à titre d'exemple, l'ergot fixe 19 traverse une plaque métallique 20 insérée dans le béton 21 et s'étend jusque dans le béton. L'ergot est amené à traverser le profilé en L lorsque la cloison repose au sol, le profilé comportant donc une percée disposée dans l'axe du logement dans la paroi fixe. Le logement de l'ergot dans la paroi fixe permet de rigidifier la façade lorsqu'elle repose au sol. Toujours avec pour objectif de rigidifier la façade lorsqu'elle repose au sol, le second montant latéral 8 comporte sur son sommet un autre ergot 22, aussi appelé second ergot, venant se loger dans un évidement 23 de la poutre linteau lorsque la cloison repose au sol (voir figures 1 et 4A). Tel qu'illustré sur la vue en plan de la figure 1, l'ergot 22 est disposé sur l'aile du U en regard de la poutre linteau 6.

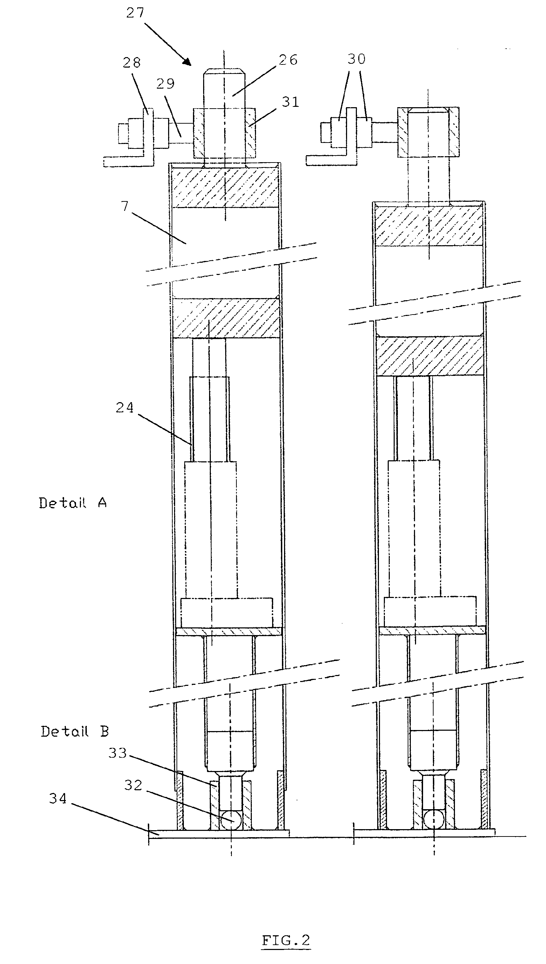

Selon la présente invention et tel qu'illustré à la figure 2, l'intérieur du premier montant latéral 7 comporte un vérin hydraulique intégré avec une pompe 24 actionnable manuellement depuis l'extérieur du premier montant via une ouverture 25 visible à la figure 1. L'actionnement de la pompe permet de lever le premier montant latéral et tous les éléments qui lui sont solidaires, à savoir l'ensemble de la cloison à l'exception du second montant latéral. Selon la présente invention, la pompe peut être dissociée du vérin hydraulique et être disposée à l'extérieur du premier montant latéral. On notera également que le premier montant comporte des moyens d'ouverture permettant de disposer le vérin à l'intérieur du premier montant ou de l'enlever.

Selon la présente invention et tel qu'illustré aux figures 1, 2, 4A et 4B, le premier montant latéral creux 7 comporte sur son sommet une tige 26 venant coulisser dans un dispositif de réglage d'aplomb 27 lors du levage (ou de la descente) de la cloison. Ainsi, le dispositif de réglage d'aplomb 27 visible en détail à la figure 4A comporte un profilé 28, par exemple, en équerre dont une des ailes peut être avantageusement fixée au second montant latéral 8 de la cloison adjacente. L'autre aile du profilé disposée dans une direction sensiblement parallèle à celle de l'axe du second montant latéral (ou du premier) est traversée par une tige filetée 29 et immobilisée par rapport au profilé au moyen, par exemple, de deux écrous 30. La tige filetée 29 comporte à une de ses extrémités un anneau 31 destiné à accueillir et à guider la tige 26 du premier montant latéral 7 lors de la montée et de la descente de la cloison. Le réglage de l'aplomb peut s'effectuer en mobilisant la tige filetée pour permettre son déplacement axial. Selon la présente invention, le profilé pourra revêtir toute forme permettant sa fixation à un élément extérieur et ayant une aile sensiblement parallèle à l'axe du premier (ou du second) montant.

A titre indicatif non limitatif, la cloison peut être soulevée par exemple de quatre centimètres pour passer au dessus des irrégularités du sol du couloir. Dans le cas d'une cloison de séparation entre boxes, la distance peut être supérieure et, par exemple, de l'ordre de vingt centimètres, pour passer au dessus du fumier du box. On notera, dans ce dernier cas, que le profil du second montant latéral est adapté pour prendre en compte le fait que la cloison ne comporte pas de porte coulissante. Le principe de fonctionnement restera néanmoins similaire (second montant fixe, présence d'un ergot, ...) .

Après son relèvement d'une distance donnée, la cloison peut être pivotée manuellement à 180° autour du premier montant latéral 7 qui constitue l'axe de rotation, la cloison pivote ainsi jusqu'à se superposer sur la façade voisine tel qu'illustré à la figure 3. Selon l'invention et tel qu'illustré à la figure 2, la rotation s'effectue sur une bille en acier 32 disposée dans un alésage 33 à la base du premier montant latéral 7. Préférentiellement, la bille 32 est disposée sur une plaque 34 d'épaisseur équivalente à celle du profilé 15. En variante, la rotation peut s'effectuer à l'aide d'un roulement conique à rouleaux. Cette alternative a néanmoins pour désavantage qu'elle nécessite beaucoup plus d'usinage d'emboîtements et elle est, en conséquence, plus onéreuse.

Ainsi, l'utilisateur désirant, par exemple, dégager le couloir pour le passage d'une remorque va actionner manuellement la pompe hydraulique pour lever la cloison. La poutre linteau se désolidarise ainsi de l'ergot du second montant latéral et la paroi fixe se désolidarise de l'ergot ancré au sol. Ensuite, l'utilisateur fait pivoter la cloison à 180° et la rabat sur la cloison du box adjacent. On notera que l'utilisateur doit, dans le cas d'une cloison comportant une porte coulissante, désenclaver la porte coulissante, donc l'ouvrir, avant de faire pivoter la cloison. Cela permet de déplacer le poids en porte à faux vers l'axe de rotation.

Pour refermer et descendre la cloison, l'utilisateur fait pivoter la cloison à 180°, actionne la pompe et, lors de la descente, les ergots viennent se positionner dans leurs logements respectifs, la cloison est ainsi fermée. Selon les besoins, l'utilisateur laissera la porte coulissante ouverte ou fermée.

### Avantageas du dispositif

La cloison posant au sol en position fermée ne laisse plus passer la paille de la litière.

Les manipulations sont réduites au minimum pour l'utilisateur car le mouvement de descente engage automatiquement des ergots au niveau du coin de la paroi fixe et de la poutre linteau pour rigidifier la cloison en position fermée. L'indexation simultanée de la cloison au sol et de la poutre linteau au sommet du second montant latéral est primordiale pour résister au poids du cheval poussant latéralement sur la cloison. On précisera à cet égard que le dispositif de réglage d'aplomb de la cloison permet de réaliser un accostage précis de la poutre linteau sur le second montant latéral pour l'indexation.

Le pivotement à 180° libère l'espace couloir pour le stationnement d'une remorque de chargement du fumier.

La rotation est faite sans charnière mais bien sur une bille en acier disposée au sol avec au sommet du premier montant latéral le réglage d'aplomb coulissant par le mouvement de montée. Le système de rotation sur bille est particulièrement bien adapté pour la rotation de cloison lourde, telle que celle pour box à chevaux, sachant que le poids de la cloison doit être repris par le premier montant latéral. En effet, le dispositif selon l'invention a pour avantage que le frottement est limité à une faible surface à savoir la surface de contact entre la bille et l'alésage. Le réglage d'aplomb assure quant à lui, comme déjà mentionné, la mise à niveau lors de l'accostage de la cloison en cours de fermeture ainsi que lors du coulissement de la porte.

Le système est autonome ne nécessitant pas un apport d'énergie extérieure par un raccordement soit électrique soit pneumatique. De plus, chaque pompe est manoeuvrée manuellement pour rendre chaque ensemble autonome.

## Revendications

1. Cloison (1) pour box à chevaux munie d'un châssis (2) comportant une poutre linteau (6) reliant dans leur partie supérieure un premier montant latéral creux (7) à un second montant latéral (8) fixe, et munie d'une paroi fixe (3) solidaire du premier montant latéral (7) et de la poutre linteau (6), ladite cloison reposant au sol et comportant des moyens d'élévation (24) ainsi que des moyens de pivotement (32) à 180° autour de l'axe longitudinal du premier montant latéral (7), **caractérisée en ce que** lesdits moyens de pivotement comportent une bille (32) disposée à la base dudit premier montant latéral creux (7) et **en ce que** le second montrant latéral (8) comporte sur son sommet un ergot (22) destiné à venir se loger dans un évidement (23) de la poutre linteau lorsque la cloison repose au sol.

2. Cloison (1) selon la revendication 1, comportant en outre une porte (5) montée coulissante sur un rail (11) solidaire de la poutre linteau (6), ladite porte (5) étant destinée à libérer un accès (4) à un espace intérieur délimité par la cloison lorsqu'elle est coulissée devant la paroi fixe (3).

3. Cloison (1) selon l'une quelconque des revendications précédentes, **caractérisée en ce que** les moyens d'élévation (24) comportent un vérin hydraulique logé à l'intérieur du premier montant latéral creux (7) et une pompe.

4. Cloison (1) selon l'une quelconque des revendications précédentes, **caractérisée en ce que** la paroi fixe (3) est encadrée par le premier montant latéral (7), la poutre linteau (6), une tranche inférieure (9) et une tranche verticale (10), ladite tranche inférieure (9) ou la base de ladite tranche verticale (10) étant munie d'un logement (18) destiné à accueillir un autre ergot (19) lorsque la cloison repose au sol, ledit ergot (19) étant ancré dans le sol.

5. Cloison (1) selon l'une quelconque des revendications précédentes, **caractérisée en ce que** le premier montant latéral (7) est surmonté par une tige axiale (26) destinée à coulisser à l'intérieur d'un anneau (31) d'un dispositif de réglage d'aplomb (27) de la Cloison.

6. Cloison (1) selon la revendication 5, **caractérisée en ce que** ledit dispositif (27) comporte une tige filetée (29) dont l'axe est sensiblement parallèle à celui de la poutre linteau, ladite tige (29) étant immobilisée à l'aide d'écrous de réglage (30) disposés de part et d'autre d'un profilé (28) dont une des ailes est sensiblement parallèle à l'axe longitudinal du premier montant latéral, ladite tige (29) étant terminée à l'une de ses extrémités par ledit anneau (31).

7. Cloison (1) selon la revendication 3, **caractérisée en ce que** la pompe est intégrée avec le vérin hydraulique à l'intérieur du premier montant latéral (7) et actionnable manuellement via une ouverture (25) ménagée sur le premier montant latéral.

8. Cloison (1) selon la revendication 2, **caractérisée en ce qu'**elle comporte des moyens pour verrouiller la porte coulissante (5) en position ouverte ou fermée.

9. Cloison (1) selon l'une quelconque des revendications précédentes, **caractérisée en ce que** la bille (32) est en acier.

10. Cloison (1) selon l'une quelconque des revendications précédentes, **caractérisée en ce que** la bille (32) est disposée dans un alésage (33) sur une plaque (34).

11. Cloison (1) selon les revendications 2 et 4, **caractérisée en ce que** la base de la tranche verticale (10) est solidaire d'un profilé (15) en L servant de guide lors du coulissement de la porte (5).

12. Cloison (1) selon la revendication 11, **caractérisée en ce qu'**il existe un espace de taille inférieur à un centimètre en dessous d'une partie ou de la totalité de la tranche inférieure (9) de la paroi fixe.

13. Box à chevaux comportant une cloison (1) selon l'une quelconque des revendications 1 à 12.

## Patentansprüche

1. Trennwand (1) für eine Pferdebox, die mit einem Rahmen (2) ausgestattet ist, der einen Sturzbalken (6) aufweist, die in ihrem oberen Teil einen ersten hohlen seitlichen Pfosten (7) mit einem zweiten starren seitlichen Pfosten (8) verbindet, und mit einer starren Wand (3) ausgestattet ist, die mit dem ersten seitlichen Pfosten (7) und mit dem Sturzbalken (6) verbunden ist, wobei die Trennwand auf dem Boden ruht und Hebemittel (24) sowie Schwenkmittel (32) in 180° um die Längsachse des ersten seitlichen Pfostens (7) aufweist, **dadurch gekennzeichnet, dass** die Schwenkmittel eine Kugel (32) aufweisen, die an der Basis des ersten hohlen seitlichen Pfostens (7) angeordnet ist und dass der zweite seitliche Pfosten (8) an seiner Spitze einen Sporn (22) aufweist, der dazu bestimmt ist, in einer Aussparung (23) des Sturzbalkens aufzuliegen, wenn die Trennwand auf dem Boden ruht.

2. Trennwand (1) nach Anspruch 1, die ferner eine Tür (5) aufweist, die auf einer mit dem Sturzbalken (6) verbundenen Schiene (11) verschiebbar montiert ist, wobei die Tür (5) dazu bestimmt ist, einen Zugang (4) zu einem Innenraum freizugeben, der von der Trennwand begrenzt ist, wenn sie vor die starre Wand (3) geschoben ist.

3. Trennwand (1) nach einem der vorangehenden Ansprüche, **dadurch gekennzeichnet, dass** die Hebemittel (24) einen Hydraulikzylinder, der im ersten hohlen seitlichen Pfosten (7) untergebracht ist, und eine Pumpe aufweisen.

4. Trennwand (1) nach einem der vorangehenden Ansprüche, **dadurch gekennzeichnet, dass** die starre Wand (3) von dem ersten seitlichen Pfosten (7), dem Sturzbalken (6), einem unteren Abschnitt (9) und einem vertikalen Abschnitt (10) umrahmt ist, wobei der untere Abschnitt (9) oder die Basis des vertikalen Abschnitts (10) mit einer Aufnahme (18) ausgestattet sind, die dazu bestimmt ist, einen anderen Sporn (19) aufzunehmen, wenn die Trennwand auf dem Boden ruht, wobei der Sporn (19) im Boden verankert ist.

5. Trennwand (1) nach einem der vorangehenden Ansprüche, **dadurch gekennzeichnet, dass** der erste seitliche Pfosten (7) von einem axialen Stift (26) überragt wird, der dazu bestimmt ist, in einem Ring (31) einer Regulierungsvorrichtung der lotrechten Lage (27) der Trennwand zu gleiten.

6. Trennwand (1) nach Anspruch 5, **dadurch gekennzeichnet, dass** die Vorrichtung (27) einen Gewindestift (29) aufweist, dessen Achse etwa parallel zu der des Sturzbalkens ist, wobei der Stift (29) mit Hilfe von Regulierungsschrauben (30) ruhiggestellt wird, die auf der einen und der anderen Seite eines Profils (28) angeordnet sind, von dem einer der Flügel etwa parallel zur Längsachse des ersten seitlichen Pfostens ist, wobei der Stift (29) an einem seiner Enden durch den Ring (31) beendet wird.

7. Trennwand (1) nach Anspruch 3, **dadurch gekennzeichnet, dass** die Pumpe mit dem Hydraulikzylinder im ersten seitlichen Pfosten (7) integriert ist und manuell über eine Öffnung (25) bedienbar ist, die auf dem ersten seitlichen Pfosten ausgebildet ist.

8. Trennwand (1) nach Anspruch 2, **dadurch gekennzeichnet, dass** sie Mittel aufweist, um die Schiebetür (5) in geöffneter oder geschlossener Stellung zu verriegeln.

9. Trennwand (1) nach einem der vorangehenden Ansprüche, **dadurch gekennzeichnet, dass** die Kugel (32) aus Stahl ist.

10. Trennwand (1) nach einem der vorangehenden Ansprüche, **dadurch gekennzeichnet, dass** die Kugel (32) in einer Bohrung (33) auf einer Platte (34) angeordnet ist.

11. Trennwand (1) nach den Ansprüchen 2 und 4, **dadurch gekennzeichnet, dass** die Basis des vertikalen Abschnitts (10) mit einem L-förmigen Profil (15) verbunden ist, das beim Gleiten der Tür (5) als Führung dient.

12. Trennwand (1) nach Anspruch 11, **dadurch gekennzeichnet, dass** es unter einem Teil oder der Gesamtheit des unteren Abschnitts (9) der starren Wand einen um einen Zentimeter kleineren Raum gibt.

13. Pferdebox, die eine Trennwand (1) nach einem der Ansprüche 1 bis 12 aufweist.

## Claims

1. A partition (1) for a horse stall equipped with a frame (2) including a lintel beam (6) connecting a first hollow lateral upright (7) to a second fixed lateral upright (8) in their upper part, respectively and equipped with a fixed wall (3) connected to the first lateral upright (7) and the lintel beam (6), said partition resting on the ground and comprising elevation means (24) as well as 180° pivoting means (32) around the longitudinal axis of the first lateral upright (7), **characterized in that** said pivoting means comprise a ball (32) positioned at the base of said first hollow lateral upright (7) and **in that** the second lateral upright (8) comprises, on its apex, a lug (22) intended to lodge itself in a cavity (23) of the lintel beam when the partition rests on the ground.

2. The partition (1) according to claim 1, also comprising a door (5) slidingly mounted on a rail (11) connected to the lintel beam (6), said door (5) being intended to free access (4) to an inner space delimited by the partition when it is slid in front of the fixed wall (3).

3. The partition (1) according to any one of the preceding claims, **characterized in that** the elevation means (24) comprise a hydraulic cylinder lodged inside the first hollow lateral upright (7) and a pump.

4. The partition (1) according to any one of the preceding claims, **characterized in that** the fixed wall (3) is framed by the first lateral upright (7), the lintel beam (6), a lower edge (9) and a vertical edge (10), said lower edge (9) or the base of said vertical edge (10) being equipped with a housing (18) intended to receive another lug (19) when the partition rests on the ground, said lug (19) being anchored in the ground.

5. The partition (1) according to any one of the preceding claims, **characterized in that** the first lateral upright (7) is topped by an axial rod (26) intended to slide inside a ring (31) of a device (27) for adjusting the verticality of the partition.

6. The partition (1) according to claim 5, **characterized in that** said device (27) comprises a threaded rod (29), the axis of which is substantially parallel to that of the lintel beam, said rod (29) being immobilized using adjusting nuts (30) positioned on either side of a section (28), one wing of which is substantially parallel to the longitudinal axis of the first lateral upright, said rod (29) ending at one of its ends with said ring (31).

7. The partition (1) according to claim 3, **characterized in that** the pump is integrated with the hydraulic cylinder inside the first lateral upright (7) and operable manually via an opening (25) on the first lateral upright.

8. The partition (1) according to claim 2, **characterized in that** it comprises means for locking the sliding door (5) in the open or closed position.

9. The partition (1) according to any one of the preceding claims, **characterized in that** the ball (32) is made from steel.

10. The partition (1) according to any one of the preceding claims, **characterized in that** the ball (32) is positioned in a bore (33) on a plate (34).

11. The partition (1) according to claims 2 and 4, **characterized in that** the base of the vertical edge (10) is connected to an L-shaped section (15) serving as a guide during the sliding of the door.

12. The partition (1) according to claim 11, **characterized in that** there is a space of a size smaller than one centimeter below a part or all of the lower edge (9) of the fixed wall.

13. A horse stall comprising a partition (1) according to any one of claims 1 to 12.
